# EUROPÄISCHE PATENTSCHRIFT

(11) **EP 1 581 581 B1**
(45) Veröffentlichungstag und Bekanntmachung des Hinweises auf die Patenterteilung: **21.11.2007**
(21) Anmeldenummer: 03813910.1
(22) Anmeldetag: 23.12.2003
(51) Int. Cl.: C08G 65/20

(54) **VERFAHREN ZUR POLYMERISATION CYCLISCHER ETHER**
METHOD FOR THE POLYMERIZATION OF CYCLIC ETHERS
PROCEDE DE POLYMERISATION D'ETHERS CYCLIQUES

(30) Priorität: 23.12.2002 DE 10261484
(43) Veröffentlichungstag der Anmeldung: 05.10.2005
(73) Patentinhaber: BASF Aktiengesellschaft, 67056 Ludwigshafen (DE)
(72) Erfinder: SCHLITTER, Stephan, 67117 Limburgerhof (DE); HAUBNER, Martin, 69124 Eppelheim (DE); ZEHNER, Peter, 67071 Ludwigshafen (DE); HESSE, Michael, 67549 Worms (DE); WECK, Alexander, 67251 Freinsheim (DE); PINKOS, Rolf, 67098 Bad Dürkheim (DE); GRASSLER, Thomas, 67117 Limburgerhof (DE)
(74) Vertreter: Isenbruck, Günter
(86) Internationale Anmeldenummer: PCT/EP2003/014790
(87) Internationale Veröffentlichungsnummer: WO 2004/058855

(56) Entgegenhaltungen:
- WO-A-03/002631
- US-A- 5 136 106
- US-B1- 6 362 312

## Beschreibung

Die vorliegende Erfindung betrifft ein Verfahren zur ringöffnenden Polymerisation cyclischer Ether, insbesondere von Tetrahydrofuran und Tetrahydrofuran-Derivaten, in Gegenwart eines heterogenen anorganischen Katalysators, vorzugsweise auf Basis aktivierter. Schichtsilikate oder gemischter Metalloxide. Der Katalysator ist als Fliessbett angeordnet.

Polytetrahydrofuran (im folgenden "PTHF"), auch Polyoxybutylenglykol genannt, ist in der Kunststoff- und Kunstfaserindustrie ein vielseitiges Zwischenprodukt und wird unter anderem als Diolkomponente zur Herstellung von Polyurethan-, Polyester- und Polyamid-Elastomeren verwendet. Daneben ist es -wie auch manche seiner Derivate- in vielen Anwendungsfällen ein wertvoller Hilfsstoff, z. B. als Dispergiermittel oder beim Entfärben ("Deinken") von Altpapier.

PTHF wird technisch üblicherweise durch Polymerisation von Tetrahydrofuran (im folgenden "THF") an geeigneten Katalysatoren hergestellt, wobei zwischen dem sogenannten einstufigen und dem zweistufigen Verfahren unterschieden wird. Die Darstellung erfolgt in Gegenwart von Reagenzien, deren Zugabe die Steuerung der Kettenlänge der Polymerketten und so die Einstellung des mittleren Molekulargewichts ermöglicht (Kettenabbruchreagenzien oder "Telogene"). Die Steuerung erfolgt dabei durch Wahl von Art und Menge des Telogens. Durch Wahl geeigneter Telogene können zusätzlich funktionelle Gruppen an einem Ende oder beiden Enden der Polymerkette eingeführt werden.

So können z.B. durch Verwendung von Carbonsäuren oder Carbonsäureanhydriden als Telogene die Mono- oder Diester von PTHF hergestellt werden. Erst durch anschließende Verseifung oder Umesterung entsteht PTHF selbst. Daher wird diese Herstellung als zweistufiges PTHF-Verfahren bezeichnet.

Andere Telogene wirken nicht nur als Kettenabbruchreagenzien, sondern werden auch in die wachsende Polymerisatkette von PTHF eingebaut. Sie haben nicht nur die Funktion eines Telogens, sondern sind gleichzeitig ein Comonomer. Beispiele für solche Comonomere/ Telogene sind Verbindungen mit zwei Hydroxylgruppen, vorzugsweise Dialkohole. Dies können beispielsweise Ethylenglykol, Propylenglykol, Butylenglykol, 1,3-Propandiol, 1,4-Butandiol, 2-Butin-1,4-diol, 2,2-Dimethyl-1,3-propandiol, 1,6-Hexandiol oder niedermolekulares PTHF sein.

Weiterhin sind als Comonomere cyclische Ether, vorzugsweise drei-, vier- und fünfgliedrige Ringe, wie 1,2-Alkylenoxide, z.B. Ethylenoxid oder Propylenoxid, Oxetan, substituierte Oxetane, wie 3,3-Dimethyloxetan, sowie THF-Derivate wie z.B. 3-Methyltetrahydrofuran, 3,3-Dimethyltetrahydrofuran oder 3,4-Dimethyltetrahydrofuran geeignet.

Die Verwendung solcher Comonomere/Telogene führt mit Ausnahme von Wasser, 1,4-Butandiol und niedermolekularem PTHF zur Herstellung von Tetrahydrofuran-Copolymeren - im folgenden THF-Copolymere genannt- und ermöglicht es auf diese Weise, PTHF chemisch zu modifizieren.

Technisch lässt sich PTHF einstufig durch THF-Polymerisation mit Wasser, 1,4-Butandiol oder niedermolekularem PTHF als Telogen an sauren Katalysatoren herstellen. Als Katalysatoren sind sowohl homogene, im Reaktionssystem gelöste Systeme als auch heterogene, d.h. weitgehend ungelöste Systeme, bekannt. Nachteilig sind jedoch die relativ geringen THF-Umsätze, die vor allem bei der Synthese von PTHF des Molekulargewichts 650 bis 3000 erreicht werden.

Großtechnisch werden überwiegend die oben erwähnten zweistufigen Verfahren durchgeführt, bei denen THF, häufig in Gegenwart saurer Katalysatoren, zunächst zu den entsprechenden Polytetrahydrofuran-Estern polymerisiert und anschließend zu PTHF hydrolysiert wird. Üblicherweise werden bei dieser Form der THF-Polymerisation höhere THF-Umsätze als bei einstufigen Verfahren erzielt. Häufig geschieht die Umsetzung in Gegenwart von Fluorsulfonsäure als Katalysator. Vorteilhaft ist vor allem die THF-Polymerisation in Gegenwart saurer Katalysatoren unter Zusatz von Carbonsäureanhydriden. Beispielsweise werden mit Acetanhydrid PTHF-Diacetate und durch die anschliessende Umesterung dieser Diacetate mit Methanol PTHF und als Nebenprodukt Methylacetat erhalten. Die Umesterung geschieht vorzugsweise basenkatalysiert.

Die Herstellung von PTHF durch THF-Polymerisation in Gegenwart von Carbonsäureanhydriden, Wasser, 1,4-Butandiol und/oder niedermolekularem PTHF bzw. die analoge Herstellung von THF-Copolymeren mit cyclischen Ethern als Comonomeren an festen sauren Katalysatoren ist bekannt.

Katalysatoren auf Basis von Bleicherden sind z.B. in DE-A 12 26 560 beschrieben.

Weiterhin sind Katalysatoren auf Basis gemischter Metalloxide für die Polymerisation von THF bekannt. So offenbart die JP-A 04-306228 die Polymerisation von THF in Gegenwart eines Carbonsäureanhydrids an einem gemischten Metalloxid bestehend aus Metalloxiden der Formel MₓO_{y} mit ganzzahligen x und y im Bereich 1 bis 3. Genannt werden als Beispiele Al₂O₃-SiO₂, SiO₂-TiO₂, SiO₂-ZrO₂ und TiO₂-ZrO₂.

Die US 5,208,385 offenbart Katalysatoren auf Basis amorpher Silicium/Aluminium-Mischoxide. Auch Mischoxide auf Basis SnO₂/SiO₂, Ga₂O₃/SiO₂, Fe₂O₃/SiO₂, In₂O₃/SiO₂, Ta₂O₅/SiO₂ und HfO₂/SiO₂ sind bekannt. Die vorgenannten Katalysatoren werden vorzugsweise durch Copräzipitation/Sol-Gel-Methoden hergestellt.

Trägerkatalysatoren sind in der DE-A 44 336 06 offenbart, wobei Wolfram- oder Molybdänoxide auf z.B. ZrO₂, TiO₂ HfO₂ Y₂O₃, Fe₂O₃, Al₂O₃, SnO₂, SiO₂ oder ZnO aufgebracht werden. Weiterhin werden ZrO₂/SiO₂-Katalysatoren empfohlen, bei denen der Träger eine Alkalimetall-Konzentration < 5000ppm aufweist.

Katalysatoren auf Basis saurer Ionentauscher sind in US 4,120,903 für die Polymerisation von THF, insbesondere alpha-Fluorsulfonsäure enthaltende Polymere (beispielsweise Nafion® ), in Gegenwart von Essigsäureanhydrid beschrieben. Weiterhin sind Katalysatoren, die ein Metall und Perfluoralkylsulfonsäure-Anionen enthalten, für die THF-Polymerisation geeignet.

Daneben sind als Polymerisationskatalysatoren noch weitere gegebenenfalls aktivierte Tonmineralien bekannt, offenbart beispielsweise in der WO 94/05719, WO 96/23833, WO 98/51729, WO 99/12992 und DE-A 195 13 493. Auch Zeolithe sind als Katalysatoren geeignet und werden beispielsweise in DE-A 43 16 138 beschrieben. Schließlich sind noch sulfatisierte Zirkonoxide, sulfatisierte Aluminiumoxide, geträgerte Heteropolysäuren und geträgertes Ammoniumbifluorid (NH₄F*HF oder Antimonpentafluorid) als geeignete Polymerisationskatalysatoren bekannt.

Der Stand der Technik beschreibt zudem verschiedene Varianten, den Katalysator einzusetzen.

In der DE-A-28 01 578 wird ein Verfahren zur Herstellung von PTHF-Diacetaten aus THF in Gegenwart von Carbonsäureanhydriden und einer Bleicherde mit einem Wassergehalt <3Gew.-% als Katalysator beschrieben. Die DE-A-29 16 653 beschreibt ein entsprechendes Verfahren an Katalysator-Formkörpern, die in einem Festbett angeordnet sind.

Die US 4,163,115 beschreibt die Herstellung von PTHF an perfluorierten sauren Ionenaustauscherharzen als Katalysator. Es wird in der Beschreibung auch die Möglichkeit erwähnt, den Katalysator durch den Feedstrom zu suspendieren.

In der JP-A2 11292958 wird ein kontinuierliches Verfahren zur Herstellung von PTHF in Gegenwart von Essigsäureanhydrid beschrieben, bei dem der Katalysator in Suspension eingesetzt und kontinuierlich abfiltriert wird; als Katalysatoren werden in den Beispielen Bleicherden und gemischte Metalloxide des Typs Zirkonoxid auf Siliciumdioxid beschrieben. Die JP-A2-2001220439 offenbart besonders geeignete Filtrationseinrichtungen für diese Verfahrensweise.

Die US 4,228,272 beschreibt einen Prozess zur Herstellung von PTHF-Copolymeren in Suspensionsfahrweise. Als Katalysator kommt säureaktivierter Montmorillonit zum Einsatz, die Reaktion wird in Rührkesseln durchgeführt und der in Suspension vorliegende Katalysator durch Filter oder Siebe im Reaktor zurückgehalten.

In der DE-A 100 32 266 ist ein Verfahren zur einstufigen Herstellung von PTHF in Gegenwart saurer heterogener Katalysatoren beschrieben. Das Verfahren wird vorzugsweise in Festbettfahrweise durchgeführt.

Die US 4,658,065 offenbart ein einstufiges Verfahren zur Herstellung von Polyetherpolyolen (u.a. PTHF-Copolymere) an Heteropolysäuren als Katalysatoren. Die Reaktion wird vorzugsweise in einem System aus mehreren Flüssigphasen durchgeführt. Erwähnt ist auch, dass geträgerte Heteropolysäuren (Träger z.B. Aktivkohle) in einem Fest- oder Fliessbettreaktor eingesetzt werden können.

In der US 6,313,262 wird PTHF einstufig an Mischungen aus Heteropolysäuren und anorganischen Oxiden hergestellt. In den Ansprüchen wird die Polymerisation im Fliessbett, Festbett oder in einem gerührten Reaktor beansprucht. Dies wird dabei nicht von der Beschreibung gestützt, in der nur Festbetten und Rührreaktoren genannt sind.

Bei den Verfahren gemäss dem Stand der Technik müssen generell bei der Durchführung in Festbettreaktoren sehr große Reaktorvolumïna und/oder sehr lange Reaktionszeiten in Kauf genommen werden, da die Produktivität von Katalysatorformkörpern relativ gering ist. Zudem ist der Austausch verbrauchter Katalysatoren mit erheblichem Aufwand verbunden und erfordert lange Stillstandszeiten.

Um die Aktivität der Katalysatoren bestmöglich zu nutzen, werden auch kleine Katalysatorpartikel bis hin zu Pulvern eingesetzt, die im Reaktionsmedium suspendiert werden. Die Abtrennung des Katalysators vom Reaktionsmedium erfordert hier jedoch einen großen technischen Aufwand.

Die Wirtschaftlichkeit eines heterogen-katalysierten Verfahrens zur Polymerisation cyclischer Ether, insbesondere von THF, hängt jedoch entscheidend von der Produktivität des Katalysators, seiner leichten Abtrennbarkeit aus dem Reaktionsmedium und einer hohen Anlagenverfügbarkeit ab. Der vorliegenden Erfindung lag daher die Aufgabe zugrunde, ein Verfahren für Polymerisation cyclischer Ether, insbesondere THF, bereitzustellen, welches die einfache Herstellung der entsprechenden Polyoxyalkylenglykole ermöglicht und die Nachteile der Verfahren nach dem Stand der Technik vermeidet. Dabei ist es besonders gewünscht, dass eine hohe Raum-Zeit-Ausbeute bei einfacher Katalysatorabtrennung und einfachem Katalysatoraustausch ermöglicht wird. Insbesondere soll das Verfahren die Herstellung von Polytetrahydrofuran sowie Polytetrahydrofuran-Copolymeren, -Diestern oder -Monoestern gestatten.

Die Aufgabe wird erfindungsgemäß gelöst durch ein Verfahren zur Herstellung von Polytetrahydrofuran, Polytetrahydrofuran-Copolymer, -Diester oder -Monoester durch Polymerisation von Tetrahydrofuran in Gegenwart mindestens eines Telogens und/oder Comonomers und eines sauren heterogenen Katalysators auf Basis aktivierter Schichtsilikate oder gemischter Metalloxide in einem Fliessbett-Reaktor.

Die Katalysatorpartikel werden dabei erfindungsgemäß vorzugsweise durch das Durchströmen mit Reaktionsmedium auf eine bestimmte Weise fluidisiert.

Bei einer Ausführungsform der Erfindung wird die Fluidisierung derart durchgeführt, dass eine Ausbildung eines expandierten Flüssigkeits-Feststoff-Fließbetts erzielt wird. Diese geht einher mit einer deutlichen Ausdehnung des Katalysatorbetts, einer entsprechenden Zunahme des Lückenvolumens zwischen den Katalysatorpartikeln und einer deutlichen Rückvermischung der Katalysatorpartikel.

In einer anderen Ausführungsform wird die Fluidisierung derart durchgeführt, dass die Ausdehnung des Katalysatorbetts und die Zunahme des Lückenvolumens zwischen den Katalysatorpartikeln gering bleibt. Damit erhalten die Katalysatorpartikel eine gewisse Beweglichkeit. Es soll jedoch dabei keine makroskopische Durchmischung des Katalysatorbetts eintreten. Dies wird durch eine Fluidisierung des Katalysatorbetts am Lockerungspunkt erreicht. Bei einem Fliessbett jenseits des Lockerungspunktes - etwa bei einem expandierten Fliessbett - tritt eine makroskopische Vermischung ein.

In beiden Ausführungsformen wird die Fluidisierung des Katalysators so durchgeführt, dass keine größeren Mengen an Katalysator aus dem Polymerisationsreaktor ausgetragen werden. Erreicht wird dieses Verhalten durch eine geeignet gewählte Durchströmung des Katalysatorbetts. Die optimale Durchströmung, ausgedrückt beispielsweise durch die Leerrohrgeschwindigkeit, muss an die gewünschte Ausführungsform der Erfindung (expandiertes Fliessbett oder Fliessbett am Lockerungspunkt), die Viskosität und Dichte des Reaktionsmediums sowie die Eigenschaften der Katalysatorpartikel, insbesondere deren Größe, Form, Dichte und Porosität, angepasst werden.

Eine zu geringe Leerrohrgeschwindigkeit führt zu einem Verlust der Fluidisierung. Mit dem Erreichen der für die Minimalfluidisierung notwendigen Leerrohrgeschwindigkeit wird ein dauerndes Lösen und Bilden von Feststoffkontakten erreicht, das für ein Fliessbett am Lockerungspunkt charakteristisch ist. Eine Erhöhung der Leerrohrgeschwindigkeit führt zur einer Vergrößerung des Abstandes zwischen den Partikeln sowie zu einer höheren Beweglichkeit der Partikel und damit zu einer makroskopischen Durchmischung des Katalysatorbetts (expandiertes Fliessbett). Zu hohe Leerrohrgeschwindigkeiten führen schließlich zu einem massiven Austrag von Katalysatorpartikeln mit dem Reaktionsmedium aus dem Reaktor.

Höhere Viskositäten des Reaktionsmediums, kleinere Katalysatorpartikel sowie geringere Dichteunterschiede zwischen Katalysatorpartikel und Reaktionsmedium bedingen geringere Leerrohrgeschwindigkeiten für die erfindungsgemäßen Verfahren und umgekehrt. Die entsprechenden Zusammenhänge sind dem Fachmann bekannt und beispielsweise in P. Zehner, Chem. Eng. Process., 19 (1985), 57-65 beschrieben.

Die optimalen Parameter für das erfindungsgemäße Verfahren am Lockerungspunkt können theoretisch oder experimentell ermittelt werden. Als experimentelles Verfahren zum Auffinden des angestrebten Lockerungspunktes eignet sich die Analyse des Druckverlustes über die Katalysatorschüttung in Abhängigkeit der Leerrohrgeschwindigkeit. Bei zu geringen Leerrohrgeschwindigkeiten steigt der Druckverlust mit der Strömungsgeschwindigkeit - entsprechend den Verhältnissen bei einem Festbett - kontinuierlich an; das Bett befindet sich noch nicht im fluidisierten Zustand. Ab dem gesuchten Lockerungspunkt (Minimalfluidisations-Geschwindigkeit) ist der Anstieg des Druckverlusts hingegen deutlich geringer bzw. bleibt konstant.

Ein Maß für das Vorliegen eines Fliessbetts am Lockerungspunkt bzw. expandierten Fliessbettes ist der Expansionsfaktor des Katalysatorbetts, d.h. das Verhältnis des vom fluidisierten Katalysatorbett eingenommenen Volumens zum Volumen des Katalysatorbetts ohne Durchströmung.

Bei einem Fliessbett am Lockerungspunkt liegt dieser Faktor bei ≤ 1,15; vorzugsweise < 1,10 und besonders bevorzugt < 1,05. Das Volumen der von Katalysatorpartikeln erfüllten Reaktionszone während der Durchströmung mit Reaktionsmedium ist also um max. 15%, vorzugsweise max. 10%, besonders bevorzugt max. 5% größer ist als im Zustand ohne Durchströmung.

Geeignete Betriebspunkte für das erfindungsgemäße Verfahren unter Ausbildung eines expandierten Fliessbetts liegen bei Leerrohrgeschwindigkeiten deutlich jenseits des Lockerungspunktes. Diese Betriebspunkte führen zu Expansionsfaktoren von 1,01 bis 4; vorzugsweise 1,05 bis 2 und besonders bevorzugt 1,1 bis 1,5 (Verhältnis des vom fluidisierten Katalysatorbett eingenommenen Volumens zum Volumen des Katalysatorbetts ohne Durchströmung). Das Volumen der von Katalysatorpartikeln erfüllten Reaktionszone während der Durchströmung mit Reaktionsmedium ist also um 1 bis 300%, vorzugsweise 5 bis 100%, besonders vorzugsweise 10 bis 50% größer als im Zustand ohne Durchströmung.

Das erfindungsgemäße Verfahren wird mit einem zur Polymerisation von THF geeigneten sauren heterogenen Katalysatoren auf Basis aktivierter Schichtsilikate oder gemischter Metalloxide betrieben. In einer bevorzugten Ausführungsform der vorliegenden Erfindung enthält das Schichtsilikate oder Metalloxid zumindest ein Oxid aus der Gruppe SiO₂, TiO₂ und/oder ZrO₂. Mehr bevorzugt sind Systeme auf Basis säureaktivierter Montmorillonite sowie auf Basis von Al₂O₃/SiO₂, ZrO₂/SiO₂, WOₓ/TiO₂ und WOₓ/ZrO₂. Besonders bevorzugt sind Systeme auf Basis säureaktivierter Montmorillonite sowie auf Basis von Al₂O₃/SiO₂, ZrO₂/SiO₂.

Sämtliche vorstehend genannten Katalysatorsysteme können eines oder mehrere der genannten aktiven Komponenten enthalten.

"WOₓ" bedeutetet dabei ein Wolframoxid, das verschiedene Stöchiometrien aufweisen kann, die zwischen den Extrema WO₂ und WO₃ schwankt (x = 2 bis 3).

Erfindungsgemäß werden von dem Begriff "Katalysatoren auf Basis aktivierter Schichtsilikate oder gemischter Metalloxide" vorzugsweise keine Zeolithe und keine Heteropolysäuren umfasst, die in der vorliegenden Erfindung vorzugsweise nicht als Katalysator eingesetzt werden.

Der Polymerisationsreaktor wird je nach Katalysator in Sumpffahrweise oder Rieselfahrweise betrieben. Bei den erfindungsgemäß eingesetzten Katalysatoren, die im Vergleich zum Reaktionsmedium spezifisch schwerer sind, durchströmt das Reaktionsgemisch den Reaktor von unten nach oben. Bevorzugt ist der Einsatz der Katalysatoren in Sumpffahrweise. Die pyknometrisch bestimmte Dichte der bevorzugten Katalysatortypen liegt bei 1,5 bis 10 g/cm³, vorzugsweise 2 bis 7 g/cm³ , insbesondere 2 bis 4 g/cm³ Die Porosität (Wasseraufnahme) der bevorzugten Katalysatoren liegt bei 0,05 bis 5 cm³/g, vorzugsweise 0,1 bis 2 cm³/g, besonders bevorzugt bei 0,2 bis 1,5 cm³/g.

Der Katalysator kann in Pulverform oder vorzugsweise als Formkörper in die Polymerisationsreaktion eingebracht werden. Die Herstellung von Formkörpern aus pulverförmigen Rohstoffen kann durch dem Fachmann bekannte Methoden wie beispielsweise Tablettierung, Agglomeration oder Extrusion erfolgen, wie sie u.a. im Handbook of Heterogenous Catalysis, Vol. 1, VCH Verlagsgesellschaft Weinheim, 1997, S. 414-417 beschrieben sind. Bei der Verformung können dem Fachmann bekannte Hilfsstoffe wie Binder, Schmierstoffe und/oder Lösungsmittel zugesetzt werden. Der Katalysator kann für die Polymerisation z. B. in Form von Zylindern, Strängen, Rippsträngen, Kugeln, Ringen oder Splitt eingesetzt werden. Vorzugsweise werden Kugeln, kugelähnliche Formkörper oder Splitt eingesetzt.

Die Teilchengröße des Katalysators kann je nach Reaktionsbedingungen und Katalysatortyp in weiten Grenzen variiert werden. Üblicherweise haben die einzelnen Katalysatorpartikel ein Volumen von 500 µm³ bis 5 cm³, vorzugsweise von 0,0005 mm³ bis 1000 mm³, mehr bevorzugt von 0,01 bis 100 mm³ und insbesondere von 0,1 bis 30 mm³. Die Schüttdichte des Katalysators liegt bei 250 bis 2500 g/l, vorzugsweise bei 400 bis 2000 g/l.

Der erfindungsgemäß eingesetzte Katalysator kann gegebenenfalls vorbehandelt werden. Als Vorbehandlung kommen beispielsweise das Trocknen mit auf 80 bis 200°C, vorzugsweise auf 100 bis 150°C erwärmten Gasen, wie z. B. Luft oder Stickstoff, in Frage.

Als Telogene für die erfindungsgemäß nicht bevorzugt einstufige Polymerisation eignen sich Wasser, 1,4-Butandiol und niedermolekulares PTHF.

Zur bevorzugten Herstellung von PTHF-Estern (zweistufiges Verfahren) eignen sich Carbonsäureanhydride und/oder Carbonsäureanhydrid/Carbonsäure-Gemische. Unter diesen sind aliphatische und aromatische Poly- und/oder Monocarbonsäuren bzw. deren Anhydride, die 2 bis 12 Kohlenstoffatome enthalten, bevorzugt. Beispiele für bevorzugte Telogene sind Essigsäureanhydrid, Propionsäureanhydrid, Bernsteinsäure- und Maleinsäureanhydrid ggf. in Gegenwart der entsprechenden Säuren. Insbesondere ist Essigsäureanhydrid als Telogen bevorzugt.

Die bei der Verwendung der bevorzugten Telogene entstehenden PTHF-Carboxylate lassen sich mit verschiedenen Verfahren in PTHF überführen beispielsweise durch das in US 4,460,796 beschriebene Verfahren.

Andere Copolymere von THF lassen sich herstellen durch die zusätzliche Verwendung von cyclischen Ethern als Comonomere, die sich ringöffnend polymerisieren lassen, vorzugsweise drei-, vier- und fünfgliedrige Ringe, wie 1,2-Alkylenoxide, z.B. Ethylenoxid oder Propylenoxid, Oxetan, substituierte Oxetane, wie 3,3-Dimethyloxetan, sowie THF-Derivate wie 3-Methyltetrahydrofuran, 3,3-Dimethyltetrahydrofuran oder 3,4-Dimethyltetrahydrofuran, wobei 3-Methyltetrahydrofuran besonders bevorzugt ist.

Das Telogen und gegebenenfalls das Comonomer wird zweckmäßigerweise in THF gelöst der Polymerisation zugeführt. Da das Telogen zum Kettenabbruch bzw. zur Kettenübertragung in der Polymerisation führt, lässt sich über die eingesetzte Telogenmenge das mittlere Molekulargewicht des Polymers steuern. Je mehr Telogen im Reaktionsgemisch enthalten ist, desto niedriger wird das mittlere Molekulargewicht des PTHF oder des betreffenden PTHF-Derivates. Je nach Telogengehalt der Polymerisationsmischung können PTHF, die betreffenden PTHF-Derivate bzw. THF-Copolymere mit mittleren Molekulargewichten von 250 bis 10000 Dalton gezielt hergestellt werden. Vorzugsweise werden mit dem erfindungsgemäßen Verfahren PTHF, die betreffenden PTHF-Derivate bzw. THF-Copolymere mit mittleren Molekulargewichten von 500 bis 5000 Dalton, besonders bevorzugt von 650 bis 4000 Dalton hergestellt.

Die Polymerisation wird im allgemeinen bei Temperaturen von 0 bis 80 °C, vorzugsweise von 25 °C bis zur Siedetemperatur des THF, durchgeführt. Der angewandte Druck ist in der Regel für das Ergebnis der Polymerisation nicht kritisch, weshalb im allgemeinen bei Atmosphärendruck oder unter dem Eigendruck des Polymerisationssystems gearbeitet wird. Ausnahmen hiervon bilden Copolymerisationen von THF mit den leichtflüchtigen 1,2-Alkylenoxiden, die vorteilhafterweise unter Druck ausgeführt werden. Üblicherweise beträgt der Druck 0,1 bis 20 bar, vorzugsweise 0,5 bis 2 bar.

Das Eduktgemisch (Feed) aus THF und Telogen und/oder Comonomer wird dem Polymerisationsreaktor in einer Menge zugeführt, dass die Katalysatorbelastung 0,01 bis 3,0 kg THF/kg Katalysator * h, vorzugsweise 0,02 bis 1,5 kg THF/kg Katalysator * h und besonders vorzugsweise 0,04 bis 0,75 kg THF/kg Katalysator * h beträgt.

Zur Vermeidung der Bildung von Etherperoxiden wird die Polymerisation vorteilhaft unter einer Inertgasatmosphäre vollzogen. Als Inertgase können z. B. Stickstoff, Kohlendioxid oder die Edelgase dienen, vorzugsweise wird Stickstoff verwendet.

Der Polymerisationsreaktor kann im geraden Durchgang, also ohne Produktrückführung, oder im Umlauf, also mit dem Führen eines Teils des den Reaktor verlassenden Polymerisationsgemischs im Kreislauf, betrieben werden.

Durch die bevorzugte Umlauffahrweise kann die für eine Fluidisierung des Katalysators geeignete Leerrohrgeschwindigkeit im Reaktor unabhängig von der Belastung des Katalysators eingestellt werden. Gleichzeitig ist über den Umlaufstrom eine effiziente Abfuhr der Reaktionswärme möglich. Das Verhältnis von Umlauf zu Zulauf ist üblicherweise kleiner oder gleich 200/1, liegt vorzugsweise bei 1/1 bis 150/1 und besonders vorzugsweise bei 5/1 bis 100/1. Für die bevorzugten Katalysatorpartikel auf Basis von säureaktiviertem Montmorillonit, Al₂O₃/SiO₂, ZrO₂/SiO₂, WOₓ/TiO₂ und/oder WOₓ/ZrO₂ mit einem Volumen des einzelnen Partikels von 0,01 bis 100 mm³ liegt die Leerrohrgeschwindigkeit bei 0,1 bis 200 m³/m²*h, vorzugsweise 0,5 bis 100 m³/m²*h.

Die Konzentration des als Telogen eingesetzten Carbonsäureanhydrids in dem dem Polymerisationsreaktor zugeführten Eduktgemisch (Feed) liegt bei 0,03 bis 30 mol%, vorzugsweise bei 0,05 bis 20 mol%, besonders bevorzugt bei 0,1 bis 10 mol%, bezogen auf das eingesetzte THF.

Wird zusätzlich eine Carbonsäure verwendet, so beträgt das Molverhältnis im Feed üblicherweise 1: 20 bis 1 : 20000, bezogen auf eingesetztes Carbonsäureanhydrid.

Werden zusätzlich Comonomere verwendet, so beträgt das Molverhältnis im Feed üblicherweise 0,1 bis 50, vorzugsweise 0,5 bis 40, besonders bevorzugt 1 bis 30 mol%, bezogen auf eingesetztes THF.

Die Polymerisationsreaktion kann in dem Fachmann bekannten Reaktortypen durchgeführt werden, bevorzugt sind Schachtreaktoren. Deren Verhältnis von Höhe zu Durchmesser kann an die angestrebten Reaktionsbedingungen (Leerrohrgeschwindigkeiten) in weitem Umfang angepasst werden. Eine Vergrößerung des Reaktordurchmessers im Bereich des Reaktorausgangs kann zu einer verringerten Strömungsgeschwindigkeit in diesem Bereich und damit zu vermindertem Katalysatoraustrag führen. Um eine gleichmäßige Fluidisierung des Katalysators zu Erreichen, ist am Reaktoreingang ein geeigneter Verteilerboden, z.B. ein Loch- oder Spaltsieb bzw. Spaltdüsen auf einem Tragboden, vorteilhaft, weiterhin kann der Reaktor Einbauten zur Wärmeabfuhr enthalten.

Das Anfahren des Polymerisationsreaktors kann mit dem oben beschriebenen Eduktgemisch erfolgen. Bevorzugt wird die Reaktion entsprechend der DE 102 42 286 mit einem Gemisch aus Polytetrahydrofuran, den Mono- oder Diestern des Polytetrahydrofurans und/oder der Tetrahydrofuran-Copolymere, Tetrahydrofuran, gegebenenfalls Comonomer und mindestens einer Carbonsäure und/oder eines Carbonsäureanhydrids angefahren. Diese bevorzugte Anfahrweise reduziert die während der Anfahrphase auftretenden Änderungen von Temperatur und Viskosität der Reaktionslösung und erleichtert somit das Einstellen des erfindungsgemäßen Fluidisierungszustandes des Katalysators.

Zur Aufarbeitung des Polymerisationsaustrags kann es erforderlich sein, den in geringen Mengen anfallenden und aus dem Reaktor ausgetragenen Katalysatorabrieb beispielsweise durch Filtration oder Zentrifugieren vom Polymerisationsgemisch abzutrennen, bevor der erhaltene Polymerisationsaustrag der weiteren Aufarbeitung zugeführt wird.

Das erfindungsgemäße Verfahren erlaubt es vorteilhaft und in einfacher Weise, während der Reaktion dem Reaktor Katalysator zu entnehmen bzw. frischen Katalysator hinzuzufügen. Damit kann das erfindungsgemäße Verfahren auch vorteilhaft mit Katalysatoren betrieben werden, deren Einsatz im Festbett aufgrund beispielsweise schneller Desaktivierung nicht wirtschaftlich ist. Durch einen geeignet angepassten, ständigen Austausch des Katalysators ist es damit möglich, die Performance des in der Reaktion eingesetzten Katalysators über fast beliebig lange Zeiten konstant zu halten.

Der Katalysatoraustausch kann sowohl kontinuierlich als auch getaktet oder diskontinuierlich erfolgen. Es ist beim erfindungsgemäßen Verfahren vorteilhaft möglich, ohne Entleeren des Reaktors und/oder Unterbrechung der Polymerisationsreaktion den Katalysatoraustausch vorzunehmen. Zum Ein- und Austrag des Katalysators eigen sich dem Fachmann bekannten Vorrichtungen.

Bei der Ausführungsform als expandiertes Fließbett kommen beispielsweise Schleusensysteme in Betracht. Durch geeignete Positionierung der Austragsvorrichtung können vorteilhafterweise bevorzugt kleinere oder größere Katalysatorpartikel dem System entnommen werden. Bei spezifisch schwereren Katalysatorpartikeln sammeln sich beispielsweise kleinere Abriebs- oder Zerfallsprodukte vorzugsweise im oberen Bereich des vom Katalysator eingenommenen Reaktionsvolumens und können dort entnommen werden.

Bei der Ausführungsform des Betriebs am Lockerungspunkt kommen neben Schleusensystemen z.B. auch Schneckensysteme wie Krählwerke mit Förderschnecke in Frage. Da die makroskopische Durchmischung des Katalysatorbetts gering ist, können gezielt die Anteile des Katalysators mit der längsten Verweilzeit im Reaktor entnommen werden. Bei spezifisch schwereren Katalysatorpartikeln kann frischer Katalysator auf das Katalysatorbett gegeben werden, während am Boden der Katalysatorschüttung der verbrauchte Katalysator entnommen werden kann, was auch als Wanderbett-Fahrweise bezeichnet wird.

Die Aufarbeitung der besonders bevorzugten PTHF-Acetate bzw. THF-Copolymer-Acetate kann nach an sich bekannten Methoden erfolgen. Beispielsweise wird nach destillativer Abtrennung von nicht umgesetztem THF und gegebenenfalls Essigsäureanhydrid, Essigsäure und Comonomer das erhaltene PTHF-Acetat bzw. THF-Copolymer-Acetat basenkatalysiert mit Methanol zu PTHF bzw. THF-Copolymer und Methylacetat umgeestert.

Gewünschtenfalls kann anschließend niedermolekulares PTHF und/oder Tetrahydrofurancopolymer eines mittleren Molekulargewichts von 200 bis 700 Dalton destillativ abgetrennt werden. Üblicherweise können hierbei auch niedermolekulare cyclische Oligomere destillativ abgetrennt werden. Als Destillationsrückstand verbleibt PTHF bzw. THF-Copolymer mit mittleren Molekulargewichten von 650 bis 10.000 Dalton.

Die erfindungsgemäßen Katalysatoren können nach ihrem Einsatz kontinuierlich oder diskontinuierlich regeneriert werden, beispielsweise durch Temperaturbehandlung, wie in der EP-A 0 535 515 beschrieben, und/oder durch Waschen des Katalysators mit wässrigen und/oder organischen Lösungsmitteln.

Die Erfindung wird nun in dem nachfolgenden Beispielen erläutert.

### Beispiel

Ein säureaktiviertes Schichtsilikat (Bleicherde K10, Fa. Südchemie) wurde in einem Laborkneter mit Wasser für 30 min. intensiv verknetet, anschließend zu Strängen mit Durchmesser 4 mm extrudiert, getrocknet und bei 350°C calciniert. Die Stränge werden zerkleinert und eine Splittfraktion von 1,0 bis 1,5 mm ausgesiebt.

Ein zylindrischer 500 ml-Reaktor (Querschnittsfläche 24,4 cm²) wird mit 50 ml Stahlkugeln von ca. 2 mm Durchmesser und 170 ml des bei 140°C vorgetrockneten Katalysators befüllt. Anschließend wird der Reaktor auf ca. 40°C erwärmt und mit einer Mischung enthaltend ca. 63 Gew.-% Polytetrahydrofuran-Diacetat einer mittleren Molmasse (Mn) von ca. 1600 g/mol, 35 Gew.-% Tetrahydrofuran und 2 Gew.-% Essigsäureanhydrid von unten her geflutet. Die am Reaktorkopf ausströmende Flüssigkeit wird mit einer Kreislaufpumpe dem Reaktor von unten wieder zugeführt. Bei einer Umpumprate von ca. 7 bis 8 l/h entsprechend einer Leerrohrgeschwindigkeit von ca. 3 m/h bildet sich ein stabiles Fliessbett mit einer Katalysatorausdehnung von ca. 230 ml (bestimmt ohne Stahlkugeln) aus.

Anschließend werden in den Reaktor zusätzlich 17g/h einer Mischung von Tetrahydrofuran (96,5 Gew.-%) und Essigsäureanhydrid (3,5 Gew.-%) eingespeist, ein vergleichbarer Volumenstrom wurde am Kopf des Reaktors aus dem Umpumpkreislauf abgezogen. Die Ausdehnung des Katalysator-Fließbetts wird durch Nachregeln der Umpumprate bei ca. 230 ml gehalten. Zur Aufarbeitung des PTHF-Diacetats wurde das anfallende Reaktionsgemisch destillativ von nichtumgesetztem THF und Essigsäureanhydrid befreit. Nach erreichen des stationären Zustands nach ca. zwei Tagen Laufzeit betrug die Eindampfrate ca. 60 %, das Molekulargewicht des PTHF-Diacetats Mn betrug ca. 1800 g/mol.

## Patentansprüche

1. Verfahren zur Herstellung von Polytetrahydrofuran, Polytetrahydrofuran-Copolymer,-Diester oder -Monoester durch Polymerisation von Tetrahydrofuran in Gegenwart mindestens eines Telogens und/oder Comonomers und eines sauren heterogenen Katalysators auf Basis aktivierter Schichtsilikate oder gemischter Metalloxide in einem Fliessbett, und wobei das Fließbett entweder am Lockerungspunkt mit einem Expansionsfaktor von < 1,15 oder als expandiertes Fließbett mit einem Expansionsfaktor von 1,01 bis 4 betrieben wird.

2. Verfahren nach Anspruch 1, **dadurch gekennzeichnet, dass** das Fließbett am Lockerungspunkt betrieben wird und einen Expansionsfaktor von < 1,10 aufweist.

3. Verfahren nach Anspruch 2, **dadurch gekennzeichnet, dass** das Fließbett einen Expansionsfaktor von < 1,05 aufweist.

4. Verfahren nach Anspruch 1, **dadurch gekennzeichnet, dass** das Fließbett als expandiertes Fließbett vorliegt und einen Expansionsfaktor von 1,05 bis 2 aufweist.

5. Verfahren nach Anspruch 4, **dadurch gekennzeichnet, dass** das Fließbett einen Expansionsfaktor von 1,1 bis 1,5 aufweist.

6. Verfahren nach einem der Ansprüche 1 bis 5, **dadurch gekennzeichnet, dass** der eingesetzte Katalysator zumindest ein Oxid aus der Gruppe SiO₂, TiO₂ und/oder ZrO₂ enthält, mehr bevorzugt auf säureaktiviertem Montmorillonit, Al₂O₃/SiO₂, ZrO₂/SiO₂, WOₓ/TiO₂ oder WOₓ/ZrO₂, insbesondere auf säureaktiviertem Montmorillonit, oder auf Al₂O₃/SiO₂, ZrO₂/SiO₂ basiert.

7. Verfahren nach einem der Ansprüche 1 bis 6, **dadurch gekennzeichnet, dass** der eingesetzte Katalysator eine pyknometrische Dichte von 1,5 bis 10 g/cm³, vorzugsweise 2 bis 7 g/cm³ , insbesondere 2 bis 4 g/cm³ aufweist.

8. Verfahren nach einem der Ansprüche 1 bis 7, **dadurch gekennzeichnet**, das die Porosität des Katalysators bei 0,05 bis 5 cm³/g, vorzugsweise 0,1 bis 2 cm³/g, besonders bevorzugt bei 0,2 bis 1,5 cm³/g liegt.

9. Verfahren nach einem der Ansprüche 1 bis 8, **dadurch gekennzeichnet**, das die einzelnen Katalysatorpartikel ein Volumen von 500 µm³ bis 5 cm³, vorzugsweise von 0,0005 mm³ bis 1000 mm³, mehr bevorzugt von 0,01 bis 100 mm³, insbesondere von 0,1 bis 30 mm³ aufweisen.

10. Verfahren nach einem der Ansprüche 1 bis 9, **dadurch gekennzeichnet**, das die Schüttdichte des Katalysators bei 250 bis 2500 g/l, vorzugsweise bei 400 bis 2000 g/l liegt.

11. Verfahren nach einem der Ansprüche 1 bis 10, **dadurch gekennzeichnet, dass** die Durchströmung durch den Reaktor von unten nach oben erfolgt.

12. Verfahren nach einem der Ansprüche 1 bis 11, **dadurch gekennzeichnet, dass** der Katalysator oder Teile des Katalysatorvolumens kontinuierlich, getaktet oder diskontinuierlich aus dem Polymerisationsreaktor entnommen und/oder zugefügt wird, ohne das hierfür ein Entleeren des Reaktors und/oder ein Unterbrechen der Polymerisationsreaktion erfolgt.

13. Verfahren nach einem der Ansprüche 1 bis 12, **dadurch gekennzeichnet, dass** Tetrahydrofuran in Gegenwart von Carbonsäureanhydriden, vorzugsweise Essigsäureanhydrid, zu Polytetrahydrofuran oder Derivaten und Copolymeren davon mit Molekulargewichten von 250 bis 10000 Dalton, vorzugsweise 500 bis 5000 Dalton, insbesondere 650 bis 4000 Dalton, polymerisiert wird.

14. Verfahren nach einem der Ansprüche 1 bis 13, **dadurch gekennzeichnet, dass** der Reaktor im Umlauf betrieben wird und das Verhältnis von Umlauf zu Zulauf kleiner oder gleich 200/1, vorzugsweise 1/1 bis 150/1, insbesondere 5/1 bis 100/1 ist.

15. Verfahren nach einem der Ansprüche 1 bis 14, **dadurch gekennzeichnet, dass** die Katalysatorbelastung 0,01 bis 3,0 kg THF/kg Katalysator * h, vorzugsweise 0,02 bis 1,5 kg THF/kg Katalysator * h und besonders vorzugsweise 0,04 bis 0,75 kg THF/kg Katalysator * h beträgt.

16. Verfahren nach einem der Ansprüche 1 bis 15, **dadurch gekennzeichnet, dass** die Leerrohrgeschwindigkeit bei 0,1 bis 200 m³/m²*h, vorzugsweise 0,5 bis 100 m³/m²*h liegt.

## Claims

1. A process for preparing polytetrahydrofuran, polytetrahydrofuran copolymer, diester or monoester by polymerizing tetrahydrofuran in the presence of at least one telogen and/or comonomer and of an acidic heterogeneous catalyst based on activated sheet silicates or mixed metal oxides in a fluidized bed, and wherein the fluidized bed is operated either at the fluidizing point with an expansion factor of < 1.15 or as an expanded fluidized bed with an expansion factor of from 1.01 to 4.

2. The process according to claim 1, wherein the fluidized bed is operated at the fluidized point and has an expansion factor of < 1.10.

3. The process according to claim 2, wherein the fluidized bed has an expansion factor of < 1.05.

4. The process according to claim 1, wherein the fluidized bed is present as an expanded fluidized bed and has an expansion factor of from 1.05 to 2.

5. The process according to claim 4, wherein the fluidized bed has an expansion factor of from 1.1 to 1.5.

6. The process according to any of claims 1 to 5, wherein the catalyst used comprises at least one oxide from the group of SiO₂, TiO₂ and/or ZrO₂, and is more preferably based on acid-activated montmorillonite, Al₂O₃/SiO₂, ZrO₂/SiO₂, WOₓ/TiO₂ or WOₓ/ZrO₂, in particular on acid-activated montmorillonite, or on Al₂O₃/SiO₂, ZrO₂/SiO₂.

7. The process according to any of claims 1 to 6, wherein the catalyst used has a pycnometric density of from 1.5 to 10 g/cm³, preferably from 2 to 7 g/cm³, in particular from 2 to 4 g/cm³.

8. The process according to any of claims 1 to 7, wherein the porosity of the catalyst is from 0.05 to 5 cm³/g, preferably from 0.1 to 2 cm³/g, more preferably from 0.2 to 1.5 cm³/g.

9. The process according to any of claims 1 to 8, wherein the individual catalyst particles have a volume of from 500 µm³ to 5 cm³, preferably from 0.0005 mm³ to 1000 mm³, more preferably from 0.01 to 100 mm³, in particular from 0.1 to 30 mm³.

10. The process according to any of claims 1 to 9, wherein the bed density of the catalyst is from 250 to 2500 g/l, preferably from 400 to 2000 g/l.

11. The process according to any of claims 1 to 10, wherein the reactor is flowed through from bottom to top.

12. The process according to any of claims 1 to 11, wherein the catalyst or portions of the catalyst volume are withdrawn from and/or fed to the polymerization reactor continuously, at regular intervals or batchwise, without the reactor being emptied and/or the polymerization reaction being interrupted for this purpose.

13. The process according to any of claims 1 to 12, wherein tetrahydrofuran is polymerized in the presence of carboxylic anhydrides, preferably acetic anhydride, to give polytetrahydrofuran or derivatives and copolymers thereof having molecular weights of from 250 to 10 000 dalton, preferably from 500 to 5 000 dalton, in particular from 650 to 4 000 dalton.

14. The process according to any of claims 1 to 13, wherein the reactor is operated in circulation and the ratio of circulation to feed is less than or equal to 200/1, preferably from 1/1 to 150/1, in particular from 5/1 to 100/1.

15. The process according to any of claims 1 to 14, wherein the catalyst hourly space velocity is from 0.01 to 3.0 kg of THF/kg of catalyst * h, preferably from 0.02 to 1.5 kg of THF/kg of catalyst * h and more preferably from 0.04 to 0.75 kg THF/kg of catalyst * h.

16. The process according to any of claims 1 to 15, wherein the superficial velocity is from 0.1 to 200 m³/m²*h, preferably from 0.5 to 100 m³/m²*h.

## Revendications

1. Procédé de préparation de polytétrahydrofuranne, de copolymères, diesters ou monoesters de polytétrahydrofuranne, par polymérisation de tétrahydrofuranne en présence d'au moins un télogène et/ou comonomère et d'un catalyseur hétérogène acide à base de phyllosilicates activés et d'oxydes métalliques mixtes dans un lit fluidisé, où le lit fluidisé est conduit, soit au point de fluidisation avec un facteur d'expansion de moins de 1,15, soit en tant que lit fluidisé expansé avec un facteur d'expansion de 1,01 à 4.

2. Procédé suivant la revendication 1, **caractérisé en ce que** le lit fluidisé est conduit au point de fluidisation et présente un facteur d'expansion de moins de 1,10.

3. Procédé suivant la revendication 2, **caractérisé en ce que** le lit fluidisé présente un facteur d'expansion de moins de 1,05.

4. Procédé suivant la revendication 1, **caractérisé en ce que** le lit fluidisé se présente en tant que lit fluidisé expansé et présente un facteur d'expansion de 1,05 à 2.

5. Procédé suivant la revendication 4, **caractérisé en ce que** le lit fluidisé présente un facteur d'expansion de 1,1 à 1,5.

6. Procédé suivant l'une quelconque des revendications 1 à 5, **caractérisé en ce que** le catalyseur mis en oeuvre contient au moins un oxyde du groupe formé par SiO₂, TiO₂ et/ou ZrO₂, plus préférablement est à base de montmorillonite activée par un acide, Al₂O₃/SiO₂, ZrO₂/SiO₂, WOₓ/TiO₂ ou WOₓ/ZrO₂, en particulier de montmorillonite activée par un acide, ou de Al₂O₃/SiO₂, ZrO₂/SiO₂.

7. Procédé suivant l'une quelconque des revendications 1 à 6, **caractérisé en ce que** le catalyseur mis en oeuvre présente une masse volumique pycnométrique de 1,5 à 10 g/cm³, de préférence de 2 à 7 g/cm³, en particulier de 2 à 4 g/cm³.

8. Procédé suivant l'une quelconque des revendications 1 à 7, **caractérisé en ce que** la porosité du catalyseur est de 0,05 à 5 cm³/g, de préférence de 0,1 à 2 cm³/g, plus préférablement de 0,2 à 1,5 cm³/g_{.}

9. Procédé suivant l'une quelconque des revendications 1 à 8, **caractérisé en ce que** les particules individuelles de catalyseur présentent un volume de 500 µm³ à 5 cm³, de préférence de 0,0005 mm³ à 1000 mm³, plus préférablement de 0,01 à 100 mm³, en particulier de 0,1 à 30 mm³.

10. Procédé suivant l'une quelconque des revendications 1 à 9, **caractérisé en ce que** la masse volumique apparente du catalyseur est de 250 à 2500 g/l, de préférence de 400 à 2000 g/l.

11. Procédé suivant l'une quelconque des revendications 1 à 10, **caractérisé en ce que** le passage dans le réacteur se fait de bas en haut.

12. Procédé suivant l'une quelconque des revendications 1 à 11, **caractérisé en ce que** le catalyseur ou des parties du volume du catalyseur est/sont prélevé(es) du et/ou envoyé(es) au réacteur de polymérisation en continu, de manière cadencée ou en mode discontinu, sans qu'il faille à cet effet vider le réacteur et/ou interrompre la réaction de polymérisation.

13. Procédé suivant l'une quelconque des revendications 1 à 12, **caractérisé en ce que** le tétrahydrofuranne est polymérisé en présence d'anhydrides d'acide carboxylique, de préférence de l'anhydride d'acide acétique, pour former du polytétrahydrofuranne ou des dérivés et des copolymères de celui-ci, ayant des poids moléculaires de 250 à 10 000 Dalton, de préférence de 500 à 5000 Dalton, en particulier de 650 à 4000 Dalton.

14. Procédé suivant l'une quelconque des revendications 1 à 13, **caractérisé en ce que** le réacteur est conduit en mode à circulation et que la proportion de circulation et d'amenée est inférieure ou égale à 200/1, de préférence de 1/1 à 150/1, en particulier de 5/1 à 100/1.

15. Procédé suivant l'une quelconque des revendications 1 à 14, **caractérisé en ce que** la charge de catalyseur est de 0,01 à 3,0 kg de THF/kg de catalyseur * h, de préférence de 0,02 à 1,5 kg de THF/kg de catalyseur * h et en particulier de 0,04 à 0,75 kg de THF/kg de catalyseur * h.

16. Procédé suivant l'une quelconque des revendications 1 à 15, **caractérisé en ce que** la vitesse en tube vide est de 0,1 à 200 m³/m²*h, de préférence de 0,5 à 100 m³/m²*h.
